# EUROPEAN PATENT SPECIFICATION

(11) **EP 1 184 686 B1**
(45) Date of publication and mention of the grant of the patent: **31.05.2006**
(21) Application number: 01120617.4
(22) Date of filing: 29.08.2001
(51) Int. Cl.: G02B 1/11

(54) **Optical element having anti-reflection film**
Optisches Element mit Antireflexbeschichtung
Elément optique avec traitement anti-réfléchissant

(30) Priority: 29.08.2000 JP 2000258628
(43) Date of publication of application: 06.03.2002
(73) Proprietor: HOYA CORPORATION, Shinjuku-ku, Tokyo 161-8525 (JP)
(72) Inventor: Mitsuishi, Takeshi, Shinjyu-ku, Tokyo 161-8525 (JP); Shinde, Kenichi, Shinjyu-ku, Tokyo 161-8525 (JP)
(74) Representative: HOFFMANN EITLE

(56) References cited:
- EP-A- 1 184 685
- DE-A- 4 427 215
- US-A- 5 372 874
- US-A- 5 589 280
- US-A- 5 691 044
- US-A- 5 942 338

## Description

### Technical Field of the Invention

The present invention relates to an optical element having an antireflection film, and especially to an optical element comprising a plastic substrate and an antireflection film, which has excellent adhesiveness between the plastic substrate and the antireflection film, and which shows good abrasion resistance, heat resistance and impact resistance.

### Prior Art

Optical elements comprising an antireflection film provided on a plastic substrate are known. Also the provision of a thin metal film layer on the surface of the plastic substrate to enhance the adhesiveness between the substrate and the antireflection film is known. For example, JP-A-186202/1987 discloses an optical element having a thin metal film layer provided on the surface of a plastic substrate, in which the metal layer is made of a metal selected from Cu, Al, Ni, Au, Cr, Pd and Sn.
However, these optical elements are unsatisfactory with regard to their heat resistance and impact resistance. Therefore, the improvement of these physical properties was desired.
To enhance the strength and impact resistance of coating films heretofore, in general, a plastic lens is provided with a basic layer of SiO₂. However, the SiO₂-layer has the drawback that it lowers the heat resistance of the plastic lens.
The document DE 4427215 discloses a niobium layer on a plastic substrate. An antireflection film an a plastic substrate is disclosed in US 5,372,874.

### Summary of the Invention

The present invention has been made to solve the above problems, i.e. it is an object of the invention to provide an optical element comprising a plastic substrate and an antireflection film, which has excellent adhesiveness between the substrate and the antireflection film, and which is excellent in heat resistance and impact resistance.
The present inventors have assiduously studied to solve the problems noted above, and, as a result, have found that, if a layer of niobium (Nb) is provided between a plastic substrate and an antireflection film forming an optical element, the adhesiveness between the substrate and the antireflection film, as well as the heat resistance and the impact resistance of the optical element are improved.
Thus, the invention provides an optical element comprising a plastic substrate and, provided thereon in this order, a basic layer of niobium (Nb) and an antireflection film.

### Detailed Description

The optical element of the invention has a basic layer of Nb, and therefore, has not only excellent adhesiveness between the plastic substrate and the antireflection film, heat resistance and impact resistance, but also excellent abrasion resistance and properties such that the absorbance index inherent to metals is low.
Most preferably, the basic layer of Nb comprises 100 wt.-% of Nb. However, mixtures of Nb with other elements, such as aluminum (Al), chromium (Cr), tantalum (Ta) and mixtures of two or more thereof can be used. The amount of these additional elements may be up to 50 wt.-% of the entire Layer, preferably up to 25 wt.-%.
The antireflection film preferably comprises two or more layers. More preferably, the antireflection film has a multi-layer structure wherein low-reflection layers and high-reflection layer alternate with each other. Two explicit embodiments of such a structure are described at a later stage.
It is preferred that the basic layer of Nb is formed in an ion-assisted process, to further improve the impact resistance and abrasion resistance. Also, preferably at least one of the layer(s) of the antireflection film is/are formed in an ion-assisted process.
The "ion-assisted process" referred to herein is a well known process also called "ion beam assisted vapor deposition process". According to this process a material is deposited on a substrate, such as a lens substrate, by vapor deposition using an ion plasma in a gas atmosphere, such as argon (Ar) and/or oxygen. In a common apparatus suitable to perform this process, preferred vapor deposition conditions are an accelerating voltage of 100-250V, and an accelerating current of 50-150 mA. A detailed description is given in e.g. US 5,268,781. Further details can be derived from M. Fliedner et al., Society of Vacuum Coaters, Albuquerque (NM), USA, 237-241 (1995) as well as from the references cited therein.
In the ion-assisted process, argon (Ar) is a preferred ionizing gas to prevent oxidation of the films being formed. This stabilizes the quality of the films formed and enables easy control of the film thickness using an optical film thickness meter.
To ensure good adhesiveness between the plastic substrate and the basic layer and a good uniformity of the initial film morphology in vapor deposition in the ion-assisted process, the plastic substrate may be subjected to ion gun pretreatment before the basic layer is formed. The ionizing gas in the ion gun pretreatment may be any of oxygen or Ar. Regarding the power range, an accelerating voltage of 50-200 V is preferred, and the accelerating current preferably is 50-150 mA.
If any one or both of the accelerating voltage and the accelerating current is lower than the respective lower limit given above, the effect of improving the adhesiveness between the plastic substrate and the basic layer formed thereon may not be sufficient in some cases. On the other hand, if any or both of the accelerating voltage and the accelerating current exceeds the respective upper limit, the plastic substrate and also the cured film and the hard coat layer thereon may sometimes be yellowed, or the abrasion resistance of the optical element may sometimes be lowered.

According to the invention, the functional antireflection film is formed after the basic layer of Nb has been provided on the substrate. The method of forming the functional film is not specifically defined. For example, it may be formed through vapor deposition, such as chemical vapor deposition (CVD) or physical vapor deposition (PVD), or by other methods such as ion plating vapor deposition.
Preferably, the antireflection film comprises a SiO₂ layer as a low-refraction layer and a TiO₂ layer as a high-refraction layer. If desired, the antireflection film may comprise a metal layer made of Nb.
If a SiO₂ layer as a low-refraction layer is formed in an ion-assisted process using Ar as ionizing gas for SiO₂ deposition, the stress within this layer can be relieved, thus improving the abrasion resistance. To obtain this desired result, the conditions of the ion-assisted process are preferably set to an ion current density on the dome in the vapor deposition device of 15-35 µA, and an accelerating voltage of 400-700 V.
If the ion current density is lower than 15 µA or the accelerating voltage is lower than 400 V, both the effect of relieving the stress and the effect of improving the abrasion resistance may be difficult to obtain. On the other hand, if the ion current density exceeds 35 µA or the accelerating voltage exceeds 700 V, the plastic substrate may sometimes be yellowed, or the optical performance may sometimes be somewhat deteriorated.

The high-refraction layer such as a TiO₂ layer may also be formed in an ion-assisted process. As the ionizing gas preferably O₂ and Ar can be used, more preferably mixtures of O₂ and Ar, as this allows to improve the refractive index of the high-refraction layer formed and to promote the improvement of the abrasion resistance. The mixing ratio of O₂ to Ar preferably ranges from 1:0.5-2.
Materials for forming the high-refraction layer are TiO₂, Nb₂O₅, Ta₂O₅, ZrO₂, Y₂O₃, and mixtures thereof. Preferred examples include TiO₂, Nb₂O₅, Ta₂O₅ and mixtures thereof
If TiO₂, Nb₂O₅ or mixtures of these two compounds thereof are used, the conditions in the ion-assisted process are preferably set to an ion current density on the dome in the vapor deposition device of 8-15 µA and an accelerating voltage of 300-700 V. The ratio of O₂ to Ar in the ionizing gas mixture preferably ranges from 1:0.7 to 1:1.0.
If Ta₂O₅ or mixtures thereof with TiO₂ and/or Nb₂O₅ are used, the conditions in the ion-assisted process are preferably set to an ion current density on the dome in the vapor deposition device of 12-20 µA and an accelerating voltage of 400-700 V. The ratio of O₂ to Ar in the ionizing gas mixture preferably ranges from 1:0.5 to 1:2.0.
If the ion current density, the accelerating voltage and the ionizing gas ratio are outside the defined ranges, the intended refractive index may not be obtained, and, in addition, the absorbance index may increase and/or the abrasion resistance may be lowered.

Preferably, the thickness of the basic layer of the optical element of the present invention is 1.0-5.0 nm. If its thickness oversteps the defined range, the basic layer may sometimes present a problem of absorbance within the film.
Two preferred embodiments (A) and (B) of the layer constitution of the basic layer (BL) and the antireflection film formed on the plastic substrate is mentioned below by indicating the material and the thickness of the layer. In these embodiments, the laminate of the 1^{st} to 7^{th} layers serves as the antireflection film.

| (A) | | | (B) | | |
|---|---|---|---|---|---|
| BL: | Nb, | 1- 5 nm | BL: | Nb, | 1- 5 nm |
| 1^{st} layer: | SiO₂, | 5- 50 nm | 1^{st} layer: | SiO₂, | 20-100 nm |
| 2^{nd} layer: | TiO₂, | 1- 15 nm | 2^{nd} layer: | Nb, | 1- 5 nm |
| 3^{rd} layer: | SiO₂, | 20-360 nm | 3^{rd} layer: | SiO₂, | 20-100 nm |
| 4^{th} layer: | TiO₂, | 5- 55 nm | 4^{th} layer: | TiO₂, | 5- 55 nm |
| 5^{th} layer: | SiO₂, | 5- 50 nm | 5^{th} layer: | SiO₂, | 5- 50 nm |
| 6^{th} layer: | TiO₂, | 5-130 nm | 6^{th} layer: | TiO₂, | 5-130 nm |
| 7^{th} layer: | SiO₂, | 70-100 nm | 7^{th} layer: | SiO₂, | 70-100 nm |

The above ranges of the film thickness are the most preferred ones for the adhesiveness between the plastic substrate and the antireflection film and for the heat resistance and impact resistance of the optical element.

The material for the plastic substrate for use in the invention is not specifically limited. Preferred examples include methyl methacrylate homopolymers, copolymers of methyl methacrylate and one or more other monomers, diethylene glycol bisallyl carbonate homopolymers, copolymers of diethylene glycol bisallyl carbonate and one or more other monomers, sulfur-containing copolymers, halogen copolymers, polycarbonates, polystyrenes, polyvinyl chlorides, unsaturated polyesters, polyethylene terephthalates, polyurethanes, and polythiourethanes.

If desired, the optical element of the invention may comprise a cured film between the plastic substrate and the basic layer.
For the cured film, preferably a composition is used that comprises metal oxide colloid particles and an organosilicon compound represented by the following general formula (1):

(R¹)ₐ(R²)_{b}Si(OR³)_{4-(a+b)} (1)

wherein R¹ and R² each independently is a group selected from C₁₋₈-alkyl, C₂₋₈-alkenyl, phenyl (optionally be substituted by one or more C₁₋₃-alkyl group(s)), a 5- or 6-membered heteroaryl group having at least one heteroatom selected from N and S (and further optionally be substituted by one or more C₁₋₃-alkyl group(s)), C₁₋₈-acyl, halogen, glycidoxy, epoxy, amino, mercapto, methacryloxy, and cyano; R³ is a group selected from C₁₋₈-alkyl, C₁₋₈-acyl, and phenyl; and a and b each independently is 0 or 1.
Explicit examples of the organosilicon compound of the general formula (1) include methyl silicate, ethyl silicate, n-propyl silicate, isopropyl silicate, n-butyl silicate, sec-butyl silicate, tert-butyl silicate, tetraacetoxysilane, methyltrimethoxysilane, methyltriethoxysilane, methyltripropoxysilane, methyltriacetoxysilane, methyltributoxysilane, methyltripropoxysilane, methyltriamyloxysilane, methyltriphenoxysilane, methyltribenzyloxysilane, methyltriphenethyloxysilane, glycidoxymethyltrimethoxysilane, glycidoxymethyltriethoxysilane, α-glycidoxyethyltriethoxysilane, β-glycidoxyethyltrimethoxysilane, β-glycidoxyethyltriethoxysilane, α-glycidoxypropyltrimethoxysilane, α-glycidoxypropyltriethoxysilane, β-glycidoxypropyltrimethoxysilane, β-glycidoxypropyltriethoxysilane, γ-glycidoxypropyltrimethoxysilane, γ-glycidoxypropyltriethoxysilane, γ-glycidoxypropyltripropoxysilane, γ-glycidoxypropyltributoxysilane, γ-glycidoxypropyltriphenoxysilane, α-glycidoxybutyltrimethoxysilane, α-glycidoxybutyltriethoxysilane, β-glycidoxybutyltrimethoxysilane, β-glycidoxybutyltriethoxysilane, γ-glycidoxybutyltrimethoxysialne, γ-glycidoxybutyltriethoxysilane, δ-glycidoxybutyltrimethoxysilane, δ-glycidoxybutyltriethoxysilane, (3,4-epoxycyclohexyl)methyltrimethoxysilane, (3,4-epoxycyclohexyl)methyltriethoxysilane, β-(3,4-epoxycyclohexyl)ethyltrimethoxysilane, β-(3,4-epoxycyclohexyl)ethyltriethoxysilane, β-(3,4-epoxycyclohexyl)ethyltripropoxysilane, β-(3,4-epoxycyclohexyl)ethyltributoxysilane, β-(3,4-epoxycyclohexyl)ethyltriphenoxysilane, γ-(3,4-epoxycyclohexyl)propyltrimethoxysilane, γ-(3,4-epoxycyclohexyl)propyltriethoxysilane, δ-(3,4-epoxycyclohexyl)butyltrimethoxysilane, δ-(3,4-epoxycyclohexyl)butyltriethoxysilane, glycidoxymethylmethyldimethoxysilane, glycidoxymethylmethyldiethoxysilane, α-glycidoxyethylmethyldimethoxysilane, α-glycidoxyethylmethyldiethoxysilane, β-glycidoxyethylmethyldimethoxysilane, β-glycidoxyethylmethyldiethoxysilane, α-glycidoxypropylmethyldimethoxysilane, α-glycidoxypropylmethyldiethoxysilane, β-glycidoxypropylmethyldimethoxysilane, β-glycidoxypropylmethyldiethoxysilane, γ-glycidoxypropylmethyldimethoxysilane, γ-glycidoxypropylmethyldiethoxysilane, γ-glycidoxypropylmethyldipropoxysilane, γ-glycidoxypropylmethyldibutoxysilane, γ-glycidoxypropylmethyldiphenoxysilane, γ-glycidoxypropylethyldimethoxysilane, γ-glycidoxypropylethyldiethoxysilane, γ-glycidoxypropylvinyldimethoxysilane, γ-glycidoxypropylvinyldiethoxysilane, γ-glycidoxypropylphenyldimethoxysilane, γ-glycidoxypropylphenyldiethoxysilane, ethyltrimethoxysilane, ethyltriethoxysilane, vinyltrimethoxysilane, vinyltriacetoxysilane, vinyltrimethoxyethoxysilane, phenyltrimethoxysilane, phenyltriethoxysilane, phenyltriacetoxysilane, γ-chloropropyltrimethoxysilane, γ-chloropropyltriethoxysilane, γ-chloropropyltriacetoxysilane, 3,3,3-trifluoropropyltrimethoxysilane, γ-methacryloxypropyltrimethoxysilane, γ-mercaptopropyltrimethoxysilane, γ-mercaptopropyltriethoxysilane, β-cyanoethyltriethoxysilane, chloromethyltrimethoxysilane, chloromethyltriethoxysilane, N-(β-aminoethyl)-γ-aminopropyltrimethoxysilane, N-(β-aminoethyl)-γ-aminopropylmethyldimethoxysilane, γ-aminopropylmethyldimethoxysilane, N-(β-aminoethyl)-γ-aminopropyltriethoxysilane, N-(β-aminoethyl)-γ-aminopropylmethyldiethoxysilane, dimethyldimethoxysilane, phenylmethyldimethoxysilane, dimethyldiethoxysilane, phenylmethyldiethoxysilane, γ-chloropropylmethyldimethoxysilane, γ-chloropropylmethyldiethoxysilane, dimethyldiacetoxysilane, γ-methacryloxypropylmethyldimethoxysilane, γ-methacryloxypropylmethyldiethoxysilane, γ-mercaptopropylmethyldimethoxysilane, γ-mercaptopropylmethyldiethoxysilane, methylvinyldimethoxysilane, and methylvinyldiethoxysilane.

The metal oxide colloid particles generally are fine metal oxide particles having a particle size of 1-500 nm. Preferred examples thereof are colloid particles of tungsten oxide (WO₃), zinc oxide (ZnO), silicon oxide (SiO₂), aluminum oxide (Al₂O₃), titanium oxide (TiO₂), zirconium oxide (ZrO₂) tinoxide (SnO₂), berylliumoxide (BeO) orantimonyoxide (Sb₂O₅). They may be used either singly or in admixture of two or more thereof.

### Examples

The present invention is described in more detail with reference to the following Examples, which, however, are not intended to restrict the scope of the invention.
The physical properties of the optical elements obtained in the following Examples and Comparative Examples were evaluated according to the methods mentioned below. The abbreviation pbw means "parts by weight".

### (1) Luminous transmittance and luminous reflectance

The luminous transmittance (Y_{T}) and the luminous reflectance (Y_{R}) of a plastic lens as a sample having an antireflection film on both surfaces was measured using a U-3410 spectrophotometer made by Hitachi, Ltd..

### (2) Film adhesiveness

Using a cutting tool, the surface of a plastic lens was cut to have 100 cross-cuts of 1 mm x 1 mm each. An adhesive tape, Cellotape, was applied on this cross-cut area and then peeled off at a stroke. The number of remaining cross-cuts was counted, and the film adhesiveness is expressed as (number of cross-cuts remained)/100 in the following Tables.

### (3) Abrasion resistance

The surface of a plastic lens was rubbed with steel wool under an applied load of 1 kgf/cm². After 20 strokes of rubbing, the surface condition of the plastic lens was evaluated according to the following criteria:
- UA:: Scratched little.
- A:: A few thin scratch marks found.
- B:: Many thin and a few thick scratch marks found.
- C:: Many thin and thick scratch marks found.
- D:: Almost completely peeled.

### (4) Heat resistance

A plastic lens was put into an oven preheated to a selected temperature, and was left there for 1 hour. This experiment was performed at different temperatures, starting from 60°C with increments of 5°. The temperature was measured, at which the lens could not withstand the heat treatment and was cracked after 1 hour. This temperature is given as heat resistance in the Tables below.

### (5) Alkali resistance

A plastic lens was dipped in an aqueous 10 % NaOH solution (at 20) for 1 hour, and its surface condition was evaluated according to the following criteria:
- UA:: Changed little.
- A:: A few peeled dots found.
- B:: Many peeled dots found.
- C:: Many peeled dots and a few peeled squares found.
- D:: Almost completely peeled.

### (6) Impact resistance

A plastic lens having a center thickness of 2.0 mm and a power of lens of 0.00 was prepared and subjected to a drop ball test as defined by FDA. "O" indicates a good sample; and "x" indicates an insufficient sample.

### (7) Thickness of layers and films

The thickness of the basic layer of Nb and the individual layers of the antireflection film was measured using light of a wavelength λ of λ = 500 nm.

### Examples 1-12

90 pbw of colloidal silica (Snowtex-40, of Nissan Chemical Industries, Ltd.), 81.6 pbw of methyltrimethoxysilane and 176 pbw of γ-glycidoxypropyltrimethoxysilane as organosilicon compounds, 2.0 pbw of 0.5 N hydrochloric acid, 20 pbw of acetic acid, and 90 pbw of water were charged into a glass container and stirred at room temperature for 8 hours. Then, the resulting solution was left at room temperature for 16 hours to obtain a hydrolyzed solution. To this solution were added 120 parts of isopropyl alcohol, 120 pbw of n-butyl alcohol, 16 pbw of aluminum acetylacetone, 0.2 pbw of a silicone surfactant, and 0.1 pbw of a UV absorbent. The mixture was stirred at room temperature for 8 hours, and then aged at room temperature for 24 hours to obtain a coating solution.
A plastic lens substrate (made from diethylene glycol bisallyl carbonate, and having a refractive index of 1.50, a center thickness of 2.0 mm and a power of lens of 0.00), which had been pretreated with an aqueous alkaline solution, was dipped in the coating solution. After completion of dipping, the plastic lens was taken out at a pulling rate of 20 cm/min. Then, the plastic lens was heated at 120°C for 2 hours to form a cured film.
Next, the resulting plastic lens was subjected to an ion gun treatment according to an ion-assisted process using an Ar gas at an ion acceleration voltage and exposure time as shown in Tables 1-6, thereby providing it with a cured hard coat layer (hereinafter referred to as layer A).
Then, a basic layer and a functional film composed of the 1st to 7th layers shown in Tables 1-6 were formed on the hard coat layer A, according to an ion-assisted process under the condition shown in Tables 1-6, thereby obtaining plastic lens samples.
The samples were evaluated according to the methods (1) to (7) mentioned above, and the results are shown in Tables 1-6.

### Comparative Examples 1-4

Plastic lenses were obtained in the same manner as in Examples 1-12, except that the basic layer was not formed and that the hard coat layer and the functional film composed of the 1st to 7th layers were formed not in the ion-assisted process but in the vapor deposition.
The plastic lenses were evaluated according to the methods (1) to (6) mentioned above, and the results are shown in Tables 7 and 8.

**Table 1**

| | Example 1 | | | | Example 2 | | | |
|---|---|---|---|---|---|---|---|---|
| Plastic lens substrate | Diethylene glycol bisallyl carbonate | | | | Diethylene glycol bisallyl carbonate | | | |
| Hard coat layer | Layer A | | | | Layer A | | | |
| Ion Acceleration Voltage for Pretreatment | 150 V | | | | 150 V | | | |
| Current | 100 mA | | | | 100 mA | | | |
| Exposure time | 60 sec | | | | 60 sec | | | |
| Gas used | Ar | | | | Ar | | | |

| | Type of film | Optical Film thickness | Setting values for ion gun | | Type of film | Optical Film thickness | Setting values for ion gun | |
|---|---|---|---|---|---|---|---|---|
| Basic layer | Nb | 4.0 nm | 150 V | 100 mA | Nb | 4.0 nm | 150 V | 100 mA |
| 1st layer | SiO₂ | 31.5 nm | 450 V | 160 mA | SiO₂ | 22.0 nm | 450 V | 160 mA |
| 2nd layer | TiO₂ | 3.5 nm | 360 V | 105 mA | TiO₂ | 29.0 nm | 360 V | 105 mA |
| 3rd layer | SiO₂ | 235.0 nm | 450 V | 160 mA | SiO₂ | 48.5 nm | 450 V | 160 mA |
| 4th layer | TiO₂ | 23.5 nm | 360 V | 105 mA | TiO₂ | 98.0 nm | 360 V | 105 mA |
| 5th layer | SiO₂ | 42.5 nm | 450 V | 160 mA | SiO₂ | 23.5 nm | 450 V | 160 mA |
| 6th layer | TiO₂ | 251.5 nm | 360 V | 105 mA | TiO₂ | 88.0 nm | 360 V | 105 mA |
| 7th layer | SiO₂ | 118.0 nm | 450 V | 160 mA | SiO₂ | 130.0 nm | 450 V | 160 mA |

| Gas used for ion assistance | Ar gas for Nb and SiO₂ | | | | Ar gas for Nb and SiO₂ | | | |
|---|---|---|---|---|---|---|---|---|
| | Mixture of O₂ and Ar (1:1) for TiO₂ | | | | Mixture of O₂ and Ar (1:1) for TiO₂ | | | |
| Evaluation of performance of plastic lens | | | | | | | | |
| Luminous reflectance (Y_{R}), % | 0.82 % | | | | 0.82 % | | | |
| Luminous transmittance (Y_{T}), % | 99.0 % | | | | 99.0 % | | | |
| Film adhesiveness | 100/100 | | | | 100/100 | | | |
| Abrasion resistance | UA | | | | UA to A | | | |
| Heat resistance | 95°C | | | | 100°C | | | |
| Alkali resistance | UA | | | | UA to A | | | |
| Impact resistance | O | | | | O | | | |

**Table 2**

| | Example 3 | | | | Example 4 | | | |
|---|---|---|---|---|---|---|---|---|
| Plastic lens substrate | Diethylene glycol bisallyl carbonate | | | | Diethylene glycol bisallyl carbonate | | | |
| Hard coat layer | Layer A | | | | Layer A | | | |
| Ion Acceleration Voltage for Pretreatment | 150 V | | | | 150 V | | | |
| Current | 100 mA | | | | 100 mA | | | |
| Exposure time | 60 sec | | | | 40 sec | | | |
| Gas used | Ar | | | | Ar | | | |

| | Type of film | Optical Film thickness | Setting values for ion gun | | Type of film | Optical Film thickness | Setting values for ion gun | |
|---|---|---|---|---|---|---|---|---|
| Basic layer | Nb | 3.5 nm | 150 V | 100 mA | Nb | 4.0 nm | 150 V | 100 mA |
| 1 st layer | SiO₂ | 94.0 nm | 450 V | 160 mA | SiO₂ | 108.0 nm | 450 V | 160 mA |
| 2nd layer | Nb | 3.5 nm | 360 V | 105 mA | TiO₂ | 52.5 nm | 360 V | 105 mA |
| 3rd layer | SiO₂ | 94.0 nm | 150 V | 100 mA | SiO₂ | 271.8 nm | 450 V | 160 mA |
| 4th layer | TiO₂ | 225.5 nm | 360 V | 105 mA | TiO₂ | 38.6 nm | 360 V | 105 mA |
| 5th layer | SiO₂ | 42.6 nm | 450 V | 160 mA | SiO₂ | 38.6 nm | 450 V | 160 mA |
| 6th layer | TiO₂ | 249.0 nm | 360 V | 105 mA | TiO₂ | 242.8 nm | 360 V | 105 mA |
| 7th layer | SiO₂ | 117.0 nm | 450 V | 160 mA | SiO₂ | 119.0 nm | 450 V | 160 mA |

| Gas used for ion assistance | Ar gas for Nb and SiO₂ | | | | Ar gas for Nb and SiO₂ | | | |
|---|---|---|---|---|---|---|---|---|
| | Mixture of O₂ and Ar (1:1) for TiO₂ | | | | Mixture of O₂ and Ar (1:1) for TiO₂ | | | |
| Evaluation of performance of plastic lens | | | | | | | | |
| Luminous reflectance (Y_{R}), % | 0.82 % | | | | 0.68 % | | | |
| Luminous transmittance (Y_{T}), % | 99.0 % | | | | 99.3 % | | | |
| Film adhesiveness | 100/100 | | | | 100/100 | | | |
| Abrasion resistance | UA | | | | UA to A | | | |
| Heat resistance | 95°C | | | | 100°C | | | |
| Alkali resistance | UA | | | | UA | | | |
| Impact resistance | O | | | | O | | | |

**Table 3**

| | Example 5 | | | | Example 6 | | | |
|---|---|---|---|---|---|---|---|---|
| Plastic lens substrate | Diethylene glycol bisallyl carbonate | | | | Diethylene glycol bisallyl carbonate | | | |
| Hard coat layer | Layer A | | | | Layer A | | | |
| Ion Acceleration Voltage for Pretreatment | 150 V | | | | 150 V | | | |
| Current | 100 mA | | | | 100 mA | | | |
| Exposure time | 40 sec | | | | 40 sec | | | |
| Gas used | Ar | | | | Ar | | | |

| | Type of film | Optical Film thickness | Setting values for ion gun | | Type of film | Optical Film thickness | Setting values for ion gun | |
|---|---|---|---|---|---|---|---|---|
| Basic layer | Nb | 4.0 nm | 150 V | 100 mA | Nb | 3.5 nm | 150 V | 100 mA |
| 1st layer 2nd layer | SiO₂ | 7.9 nm | 450 V | 160 mA | SiO₂ | 111.9 nm | 450 V | 160 mA |
| | TiO₂ | 28.4 nm | 360 V | 105 mA | Nb | 3.5 nm | 150 V | 100 mA |
| 3rd layer | SiO₂ | 49.0 nm | 450 V | 160 mA | SiO₂ | 111.9 nm | 450 V | 160 mA |
| 4th layer | TiO₂ | 116.5 nm | 360 V | 105 mA | TiO₂ | 25.2 nm | 360 V | 105 mA |
| 5th layer | SiO₂ | 10.9 nm | 450 V | 160 mA | SiO₂ | 41.2 nm | 450 V | 160 mA |
| 6th layer | TiO₂ | 110.8 nm | 360 V | 105 mA | TiO₂ | 245.0 nm | 360 V | 105 mA |
| 7th layer | SiO₂ | 125.5 nm | 450 V | 160 mA | SiO₂ | 119.3 nm | 450 V | 160 mA |

| Gas used for ion assistance | Ar gas for Nb and SiO₂ | | | | Ar gas for Nb and SiO₂ | | | |
|---|---|---|---|---|---|---|---|---|
| | Mixture of O₂ and Ar (1:1) for TiO₂ | | | | Mixture of O₂ and Ar (1:1) for TiO₂ | | | |
| Evaluation of performance of plastic lens | | | | | | | | |
| Luminous reflectance (Y_{R}), % | 0.68 % | | | | 0.68 % | | | |
| Luminous transmittance (Y_{T}), % | 99.3 % | | | | 99.3 % | | | |
| Film adhesiveness | 100/100 | | | | 100/100 | | | |
| Abrasion resistance | UA to A | | | | UA | | | |
| Heat resistance | 100°C | | | | 95°C | | | |
| Alkali resistance | UA to A | | | | UA | | | |
| Impact resistance | O | | | | O | | | |

**Table 4**

| | Example 7 | | | | Example 8 | | | |
|---|---|---|---|---|---|---|---|---|
| Plastic lens substrate | Diethylene glycol bisallyt carbonate | | | | Diethylene glycol bisallyl carbonate | | | |
| Hard coat layer | Layer A | | | | Layer A | | | |
| Ion Acceleration Voltage for Pretreatment | 150 V | | | | 150 V | | | |
| Current | 100 mA | | | | 100 mA | | | |
| Exposure time | 60 sec | | | | 60 sec | | | |
| Gas used | Ar | | | | Ar | | | |

| | Type of film | Optical Film thickness | Setting values for ion gun | | Type of film | Optical Film thickness | Setting values for ion gun | |
|---|---|---|---|---|---|---|---|---|
| Basic layer | Nb | 4.0 nm | 150 V | 100 mA | Nb | 4.0 nm | 150 V | 100 mA |
| 1st layer | SiO₂ | 14.6 nm | 450 V | 160 mA | SiO₂ | 10.5 nm | 450 V | 160 mA |
| 2nd layer | Ta₂O₅ | 9.5 nm | 420 V | 120 mA | Ta₂O₅ | 26.0 nm | 420 V | 120 mA |
| 3rd layer | SiO₂ | 292.0 nm | 450 V | 160 mA | SiO₂ | 54.2 nm | 450 V | 160 mA |
| 4th layer | Ta₂O₅ | 66.8 nm | 420 V | 120 mA | Ta₂O₅ | 94.0 nm | 420 V | 120 mA |
| 5th layer | SiO₂ | 29.7 nm | 450 V | 160 mA | SiO₂ | 24.2 nm | 450 V | 160 mA |
| 6th layer | Ta₂O₅ | 124.9nm | 420 V | 120 mA | Ta₂O₅ | 91.0nm | 420 V | 120 mA |
| 7th layer | SiO₂ | 131.2nm | 450 V | 160 mA | SiO₂ | 134.1 nm | 450 V | 160 mA |

| Gas used for ion assistance | Ar gas for Nb and SiO₂ | | | | Ar gas for Nb and SiO₂ | | | |
|---|---|---|---|---|---|---|---|---|
| | Mixture of O₂ and Ar (1 : 0.25) for Ta₂O₅ | | | | Mixture of O₂ and Ar (1 : 0.25) for Ta₂O₅ | | | |
| Evaluation of performance of plastic lens | | | | | | | | |
| Luminous reflectance (Y_{R}), % | 0.80 % | | | | 0.80 % | | | |
| Luminous transmittance (Y_{T}), % | 99.1 % | | | | 99.1 % | | | |
| Film adhesiveness | 100/100 | | | | 100/100 | | | |
| Abrasion resistance | UA | | | | UA | | | |
| Heat resistance | 95°C | | | | 95°C | | | |
| Alkali resistance | UA | | | | UA | | | |
| Impact resistance | O | | | | O | | | |

**Table 5**

| | Example 9 | | | | Example 10 | | | |
|---|---|---|---|---|---|---|---|---|
| Plastic lens substrate | Diethylene glycol bisallyl carbonate | | | | Diethylene glycol bisallyl carbonate | | | |
| Hard coat layer | Layer A | | | | Layer A | | | |
| Ion Acceleration Voltage for Pretreatment | 150 V | | | | 150 V | | | |
| Current | 100 mA | | | | 100 mA | | | |
| Exposure time | 60 sec | | | | 60 sec | | | |
| Gas used | Ar | | | | Ar | | | |

| | Type of film | Optical Film thickness | Setting values for ion gun | | Type of film | Optical Film thickness | Setting values for ion gun | |
|---|---|---|---|---|---|---|---|---|
| Basic layer | Nb | 4.0 nm | 150 V | 100 mA | Nb | 4.0 nm | 150 V | 100 mA |
| 1 st layer | SiO₂ | 33.5 nm | 450 V | 160 mA | SiO₂ | 10.5 nm | 450 V | 160 mA |
| 2nd layer | Nb₂O₅ | 4.5 nm | 360 V | 105 mA | Nb₂O₅ | 26.4 nm | 360 V | 105 mA |
| 3rd layer | SiO₂ | 292.0 nm | 450 V | 160 mA | SiO₂ | 54.2 nm | 450 V | 160 mA |
| 4th layer | Nb₂O₅ | 23.9 nm | 360 V | 105 mA | Nb₂O₅ | 94.0 nm | 360 V | 105 mA |
| 5th layer | SiO₂ | 46.2 nm | 450 V | 160 mA | SiO₂ | 24.2 nm | 450 V | 160 mA |
| 6th layer | Nb₂O₅ | 243.8 nm | 360 V | 105 mA | Nb₂O₅ | 91.0 nm | 360 V | 105 mA |
| 7th layer | SiO₂ | 121.2 nm | 450 V | 160 mA | SiO₂ | 134.1 nm | 450 V | 160 mA |

| Gas used for ion assistance | Ar gas for Nb and SiO₂ | | | | Ar gas for Nb and SiO₂ | | | |
|---|---|---|---|---|---|---|---|---|
| | Mixture of O₂ and Ar (1: 0.11) for Nb₂O₅ | | | | Mixture of O₂ and Ar (1:0.11) for Nb₂O₅ | | | |
| Evaluation of performance of plastic lens | | | | | | | | |
| Luminous reflectance (Y_{R}), % | 0.68 % | | | | 0.68 % | | | |
| Luminous transmittance (Y_{T}), % | 99.3 % | | | | 99.3 % | | | |
| Film adhesiveness | 100/100 | | | | 100/100 | | | |
| Abrasion resistance | UA | | | | UA to A | | | |
| Heat resistance | 95°C | | | | 100°C | | | |
| Alkali resistance | UA | | | | UA to A | | | |
| Impact resistance | O | | | | O | | | |

**Table 6**

| | Example 11 | | | | Example 12 | | | |
|---|---|---|---|---|---|---|---|---|
| Plastic lens substrate | Diethylene glycol bisallyl carbonate | | | | Diethylene glycol bisallyl carbonate | | | |
| Hard coat layer Ion Acceleration Voltage for Pretreatment | Layer A | | | | Layer A | | | |
| | 150 V | | | | 150 V | | | |
| Current | 100 mA | | | | 100 mA | | | |
| Exposure time | 40 sec | | | | 40 sec | | | |
| Gas used | Ar | | | | Ar | | | |

| | Type of film | Optical Film thickness | Setting values for ion gun | | Type of film | Optical Film thickness | Setting values for ion gun | |
|---|---|---|---|---|---|---|---|---|
| Basic layer | Nb | 3.5 nm | 150 V | 100 mA | Nb | 4.0 nm | 150 V | 100 mA |
| 1st layer | SiO₂ | 111.6 nm | 450 V | 160 mA | SiO₂ | 10.5 nm | 450 V | 160 mA |
| 2nd layer | Nb | 3.5 nm | 150 V | 100 mA | Nb₂O₅ | 26.4 nm | 360 V | 105 mA |
| 3rd layer | SiO₂ | 111.6 nm | 450 V | 160 mA | SiO₂ | 54.2 nm | 450 V | 160 mA |
| 4th layer | Nb₂O₅ | 24.9 nm | 360 V | 105 mA | Nb₂O₅ | 94.0 nm | 360 V | 105 mA |
| 5th layer | SiO₂ | 39.5 nm | 450 V | 160 mA | SiO₂ | 24.2 nm | 450 V | 160 mA |
| 6th layer | Nb₂O₅ | 236.3 nm | 360 V | 105 mA | Nb₂O₅ | 91.0 nm | 360 V | 105 mA |
| 7th layer | SiO₂ | 120.2 nm | 450 V | 160 mA | SiO₂ | 134.5 nm | 450 V | 160 mA |

| Gas used for ion assistance | Ar gas for Nb and SiO₂ | | | | Ar gas for Nb and SiO₂ | | | |
|---|---|---|---|---|---|---|---|---|
| | Mixture of O₂ and Ar (1:0.11) for Nb₂O₅ | | | | Mixture of O₂ and Ar (1:0.11) for Nb₂O₅ | | | |
| Evaluation of performance of plastic lens | | | | | | | | |
| Luminous reflectance (Y_{R}), % | 0.68 % | | | | 0.68% | | | |
| Luminous transmittance (Y_{T}), % | 99.3 % | | | | 99.3 % | | | |
| Film adhesiveness | 100/00 | | | | 100/100 | | | |
| Abrasion resistance | UA | | | | UA to A | | | |
| Heat resistance | 95°C | | | | 100°C | | | |
| Alkali resistance | UA | | | | UA to A | | | |
| Impact resistance | 0 | | | | 0 | | | |

**Table 7**

| | Comparative Example 1 | | | | Comparative Example 2 | | | |
|---|---|---|---|---|---|---|---|---|
| Plastic lens substrate | Diethylene glycol bisallyt carbonate | | | | Diethylene glycol bisallyl carbonate | | | |
| Hard coat layer | Layer A | | | | Layer A | | | |
| Ion Acceleration Voltage for Pretreatment | no pretreatment | | | | no pretreatment | | | |
| Current | | | | | | | | |
| Exposure time | | | | | | | | |
| Gas used | | | | | | | | |

| | Type of film | Optical Film thickness | Setting values for ion gun | | Type of film | Optical Film thickness | Setting values for ion gun | |
|---|---|---|---|---|---|---|---|---|
| Basic layer | - | - | - | - | - | - | - - | - |
| 1st layer | SiO₂ | 31.5 nm | - | - | SiO₂ | 22.0 nm | - | - |
| 2nd layer | TiO₂ | 3.5 nm | - | - | TiO₂ | 29.0 nm | - | - |
| 3rd layer | SiO₂ | 238.0 nm | - | - | SiO₂ | 48.5 nm | - | - |
| 4th layer | TiO₂ | 23.5 nm | - | - | TiO₂ | 98.0 nm | - | - |
| 5th layer | SiO₂ | 425.0 nm | - | - | SiO₂ | 23.5 nm | - | - |
| 6th layer | TiO₂ | 251.5 nm | - | - | TiO₂ | 88.0 nm | - | - |
| 7th layer | SiO₂ | 118.0 nm | - | - | SiO₂ | 130.0 nm | - | - |

| Evaluation of performance of plastic lens | | | | | | | | |
|---|---|---|---|---|---|---|---|---|
| Luminous reflectance (Y_{R}), % | 1.1 % | | | | 1.1 % | | | |
| Luminous transmittance (Y_{T}), % | 98.7 % | | | | 98.7 % | | | |
| Film adhesiveness | 95/100 | | | | 95/100 | | | |
| Abrasion resistance | B | | | | B to C | | | |
| Heat resistance | 70°C | | | | 70°C | | | |
| Alkali resistance | B | | | | B to C | | | |
| Impact resistance | x | | | | O | | | |

**Table 8**

| | Comparative Example 3 | | | | Comparative Example 4 | | | |
|---|---|---|---|---|---|---|---|---|
| Plastic lens substrate | Diethylene glycol bisallyl carbonate | | | | Diethylene glycol bisallyl carbonate | | | |
| Hard coat layer | Layer A | | | | Layer A | | | |
| Ion Acceleration Voltage for Pretreatment | no pretreatment | | | | no pretreatment | | | |
| Current | | | | | | | | |
| Exposure time | | | | | | | | |
| Gas used | | | | | | | | |

| | Type of film | Optical Film thickness | Setting values for ion gun | | Type of film | Optical Film thickness | Setting values for ion gun | |
|---|---|---|---|---|---|---|---|---|
| Basic layer | - | - | - | - | - | - | - | - |
| 1st layer | SiO₂ | 14.6 nm | - | - | SiO₂ | 10.5 nm | - | - |
| 2nd layer | Ta₂O₅ | 9.5 nm | - | - | Ta₂O₅ | 26.4 nm | - | - |
| 3rd layer | SiO₂ | 292.0 nm | - | - | SiO₂ | 54.2 nm | - | - |
| 4th layer | Ta₂O₅ | 66.8 nm | - | - | Ta₂O₅ | 94.0 nm | - | - |
| 5th layer | SiO₂ | 29.7 nm | 1 - | - | SiO₂ | 24.2 nm | - | - |
| 6th layer | Ta₂O₅ | 124.9 nm | - | - | Ta₂O₅ | 91.0 nm | - | - |
| 7th layer | SiO₂ | 131.2 nm | - | - | SiO₂ | 134.1 nm | - | - |

| Evaluation of performance of plastic lens | | | | | | | | |
|---|---|---|---|---|---|---|---|---|
| Luminous reflectance (Y_{R}), % | 1.2 % | | | | 1.2% | | | |
| Luminous transmittance (Y_{T}), % | 98.6% | | | | 98.6 % | | | |
| Film adhesiveness | 95/100 | | | | 95/100 | | | |
| Abrasion resistance | B | | | | B to C | | | |
| Heat resistance | 70°C | | | | 75°C | | | |
| Alkali resistance | B | | | | B | | | |
| Impact resistance | x | | | | x | | | |

As shown in Tables 1-6, the plastic lenses of Examples 1-12 had an extremely small luminous reflectance of from 0.68-0.82 % and had a high luminance transmittance of from 99.0-99.3 %. In addition, their film adhesiveness, abrasion resistance, heat resistance, alkali resistance and impact resistance were good.
In contrast thereto, the plastic lenses of Comparative Examples 1-4 had a high luminous reflectance of from 1.1-1.2 % and a low luminance transmittance of from 98.6-98.7 %, as shown in Tables 7 and 8 . In addition, their film adhesiveness, abrasion resistance, heat resistance, alkali resistance and impact resistance were inferior to those in Examples 1-12.

### Effects of the Invention

As described in detail hereinabove, the optical element of the invention has an antireflection film of low reflectance and high transmittance, and it shows an excellent adhesiveness between the plastic substrate and the antireflection film, as well as abrasion resistance, heat resistance, alkali resistance and impact resistance.

## Claims

1. Optical element comprising a plastic substrate and an antireflection film
**characterized by**
a basic layer of niobium (Nb) provided on said plastic substrate between said plastic substrate and said antireflection film, said basic layer of niobium being optionally in a mixture with one or more component(s) selected from aluminum (Al), tantalum (Ta), chromium (Cr) and mixtures thereof in an amount of up to 50 weight-percent of the entire layer.

2. Optical element of any of the preceding claims, wherein the basic layer consists of Nb.

3. Optical element of claim 1 or 2, wherein the basic layer has a thickness of 1.0-5.0 nm.

4. Optical element of any of the preceding claims, wherein the basic layer is obtainable by an ion-assisted process.

5. Optical element of any of the preceding claims, wherein the antireflection film comprises two or more layers.

6. Optical element of any of the preceding claims, wherein at least one layer of the antireflection film is obtainable by an ion-assisted process.

7. Optical element of any of the preceding claims, wherein the antireflection film comprises a low-reflection SiO₂-layer and high-reflection TiO₂-layer.

8. Optical element of any of the preceding claims, wherein the antireflection film comprises a layer made of Nb.

9. Optical element of any of claims 1-4 and 6, wherein the antireflection film comprises, as the 1^{st}-7^{th} layer provided successively on the basis layer, a 1^{st}, 3^{rd}, 5^{th} and 7^{th} layer of SiO₂, and a 2^{nd}, 4^{th} and, 6^{th} layer of TiO₂.

10. Optical element of any of claims 1-6, wherein the antireflection film comprises, as the 1^{st}-7^{th} layer provided successively on the basis layer, a 1^{st}, 3^{rd}, 5^{th} and 7^{th} layer of SiO₂, a 2^{nd} layer of Nb, and a 4^{th} and 6^{th} layer of TiO₂.

11. Optical element of any of the preceding claims, further comprising a cured film between the plastic substrate and the basic layer.

## Patentansprüche

1. Optisches Element, das ein Kunststoffsubstrat und einen Antireflexionsfilm umfaßt, **dadurch gekennzeichnet, daß** eine Grundschicht aus Niob (Nb) auf dem Kunststoffsubstrat zwischen dem Kunststoffsubstrat und dem Antireflexionsfilm vorgesehen ist, wobei die Grundschicht aus Niob gegebenenfalls in einer Mischung mit einem oder mehreren Bestandteil (en) in einer Menge von bis zu 50 Gew.% der gesamten Schicht vorhanden ist, der/die unter Aluminium (Al), Tantal (Ta), Chrom (Cr) und Mischungen hiervon ausgewählt wird/werden.

2. Optisches Element gemäß irgendeinem der vorhergehenden Ansprüche, worin die Grundschicht aus Nb besteht.

3. Optisches Element gemäß Anspruch 1 oder 2, worin die Grundschicht eine Dicke von 1,0 bis 5,0 nm aufweist.

4. Optisches Element gemäß irgendeinem der vorhergehenden Ansprüche, worin die Grundschicht durch ein Ionen-assistiertes Verfahren erhältlich ist.

5. Optisches Element gemäß irgendeinem der vorhergehenden Ansprüche, worin der Antireflexionsfilms zwei oder mehr Schichten umfaßt.

6. Optisches Element gemäß irgendeinem der vorhergehenden Ansprüche, worin wenigstens eine Schicht des Antireflexionsfilms durch ein Ionen-assistiertes Verfahren erhältlich ist.

7. Optisches Element gemäß irgendeinem der vorhergehenden Ansprüche, worin der Antireflexionsfilm eine gering reflektierende SiO₂-Schicht und eine hoch reflektierende TiO₂-Schicht umfaßt.

8. Optisches Element gemäß irgendeinem der vorhergehenden Ansprüche, worin der Antireflexionsfilm eine Schicht umfaßt, die aus Nb besteht.

9. Optisches Element gemäß irgendeinem der Ansprüche 1 bis 4 und 6, worin der Antireflexionsfilm als 1. bis 7. Schicht, die nacheinander auf der Grundschicht vorgesehen sind, eine 1., 3., 5. und 7. Schicht aus SiO₂ und eine 2., 4. und 6. Schicht aus TiO₂ umfaßt.

10. Optisches Element gemäß irgendeinem der Ansprüche 1 bis 6, worin der Antireflexionsfilm als 1. bis 7. Schicht, die nacheinander auf der Grundschicht vorgesehen sind, eine 1., 3., 5. und 7. Schicht aus SiO₂, eine 2. Schicht aus Nb und eine 4. und 6. Schicht aus TiO₂ umfaßt.

11. Optisches Element gemäß irgendeinem der vorhergehenden Ansprüche, das weiterhin einen gehärteten Film zwischen dem Kunststoffsubstrat und der Grundschicht umfaßt.

## Revendications

1. Elément optique comprenant un substrat en plastique et un film antireflet
**caractérisé par**
une couche de base de niobium (Nb) prévue sur ledit substrat en plastique entre ledit substrat en plastique et ledit film antireflet, ladite couche de base de niobium étant éventuellement en un mélange avec un ou plusieurs composants choisi parmi l'aluminium (Al), le tantale (Ta), le chrome (Cr) et les mélanges de ceux-ci dans une quantité allant jusqu'à 50 % en poids de la couche entière

2. Elément optique de n'importe laquelle des revendications précédente, dans lequel la couche de base est constituée de Nb.

3. Elément optique de la revendication 1 ou 2, dans lequel la couche de base a une épaisseur de 1,0 à 5,0 nm.

4. Elément optique de n'importe laquelle des revendications précédente, dans lequel la couche de base est susceptible d'être obtenue par un procédé assisté par faisceau d'ions.

5. Elément optique de n'importe laquelle des revendications précédente, dans lequel le film antireflet comprend deux couches ou plus.

6. Elément optique de n'importe laquelle des revendications précédente, dans lequel au moins une couche du film antireflet est susceptible d'être obtenue par un procédé assisté par faisceau d'ions.

7. Elément optique de n'importe laquelle des revendications précédente, dans lequel le film antireflet comprend une couche de SiO₂ à faible réflexion et une couche de TiO₂ à haute réflexion.

8. Elément optique de n'importe laquelle des revendications précédente, dans lequel le film antireflet comprend une couche faite de Nb.

9. Elément optique de n'importe laquelle des revendications 1 - 4 et 6, dans lequel le film antireflet comprend, en tant que 1^{ère} - 7^{ème} couche prévue successivement sur la couche de base, une 1^{ère}, 3^{ème}, 5^{ème} et 7^{ème} couche de SiO₂, et une 2^{ème}, 4^{ème} et 6^{ème} couche de TiO₂.

10. Elément optique de n'importe laquelle des revendications 1 - 6, dans lequel le film antireflet comprend, en tant que 1^{ère} - 7^{ème} couche prévue successivement sur la couche de base, une 1^{ère}, 3^{ème}, 5^{ème} et 7^{ème} couche de SiO₂, une 2^{ème} couche de Nb, et une 4^{ème} et 6^{ème} couche de TiO₂.

11. Elément optique de n'importe laquelle des revendications précédentes, comprenant en outre un film durci entre le substrat en plastique et la couche de base.
